(19) Europäisches Patentamt
European Patent Office
Office européen des brevets

(11) **EP 2 953 069 A1**

(12) **EUROPEAN PATENT APPLICATION**

(43) Date of publication:
**09.12.2015 Bulletin 2015/50**

(51) Int Cl.:
***G06Q 10/04*** *(2012.01)* ***G06Q 10/06*** *(2012.01)*

(21) Application number: **14171345.3**

(22) Date of filing: **05.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Technology AG**
**8050 Zürich (CH)**

(72) Inventors:
• **Saliba, Sleman**
**69115 Heidelberg (DE)**

• **Harjunkoski, Iiro**
**69469 Weinheim (DE)**
• **Franke, Carsten**
**5608 Stetten (CH)**
• **Chassein, André**
**66919 Herschberg (DE)**

(74) Representative: **Kock, Ina**
**ABB AG**
**GF-IP**
**Wallstadter Straße 59**
**68526 Ladenburg (DE)**

(54) **Method and system for improving route assignment performance**

(57)     A computer system (100), computer implemented method and computer program product for improving route assignment performance. A route data structure is provided (1010) by using column generation with a labeling algorithm. The route data structure has one or more route vectors representing a set of route options for a plurality of available resources to fulfill a plurality of job orders at respective physical locations. Each route option is associated with route specific cost wherein a particular job order location on a route is represented by a corresponding route vector element of a respective route vector. A linear program is solved (1500) to obtain a route assignment solution for the set of route options in the route data structure for the available resources in compliance with a termination parameter wherein each solution variable of the solution relates to a respective route option. If the solution is non-fractional, then the solution is provided (1600) as the route assignment solution for the set of route options. If the solution is fractional, then route options having solution variables with a non-fractional route-is-assigned value are identified (1700) as assigned routes and a subset of the fractional solution variables are rounded (1800) to the route-is-assigned value. The solving (1500) and rounding (1700) steps are repeated until the solution is non-fractional.

FIG. 1

**Description**

**Technical Field**

The present invention generally relates to electronic data processing, and more particularly, relates to methods, computer program products and systems for assigning routes.

**Background**

A common problem in workforce management is the allocation of skilled technicians to job orders and the routing of service technicians. Job orders typically have pre-defined appointment time windows and demand a certain type of skill to fulfill the job. A service technician has a particular skill set with pre-defined preferences. Pending job orders need to be assigned to available service technicians (or resources in general) in such a way that the required skill set at the customer and the offered skill set by the resources have a good match. It may be advantageous to maximize the amount of scheduled appointments and to ensure that service technicians perform the job within the defined appointment time window. Further, physical constraints, such as constraints regarding the travel distance and/or travel time (or a convex combination of both - e.g. total $CO_2$ emission) between job order locations need to be taken into account for route optimization and assignment.

Commercially available systems for route assignment/optimization use heuristics, meta-heuristics or local search methods to dispatch the service technicians to the job orders. Often the routing part is done manually by the dispatcher or the sequence is determined by the appointment time windows of the service requests. Sometimes route optimization is carried out only by a navigation system showing the shortest path from the current location to the next request.

In public literature, the problem of workforce scheduling is often named as vehicle routing problem with time windows (VRPTW). Numerous algorithms for solving this NP-hard problem are published and can be divided into heuristic methods, hybrid methods or exact methods. Exact methods are rare and only applicable to very small instances. Modern commercial applications use hybrid or decomposition methods as e.g. described in the paper "Dynamic Workforce Scheduling for British Telecommunications plc" (D. Lesaint, C. Voudouris, and N. Azarmi, Interfaces, Volume 30 Issue 1, January 2000, Pages 45-56).

A method applied to complex routing problems such as the vehicle routing problem with time windows is column generation with labeling. This approach is described for example in the book "Column Generation" (G. Desaulniers, J. Desrosiers, and M. M. Solomon (Eds.), Springer, NY (2005)). However, to make column generation applicable to the real world problem of workforce scheduling requires creating integrality (i.e., a near-optimal feasible solution) after finding the optimal fractional solution. This is achieved by solving an integer program using the produced columns from the labeling algorithm. Solving an integer program is computational expensive. Therefore, branch-and-bound or cutting planes have been introduced to speed up the computation. These techniques are also explained in the book "Column Generation". Still, the proposed prior art techniques cannot provide the performance needed for route assignment in real-world problems such as workforce scheduling.

**Summary**

Therefore, there is a need to provide an improved route assignment algorithm for workforce optimization with higher performance to allow its application in real world workforce optimization scenarios under real world constraints with sufficient accuracy.

The performance improvement is achieved by the technical solution as disclosed in the independent claims. In one embodiment, a computer implemented method for improving route assignment performance is disclosed. A route data structure is provided by using column generation with a labeling algorithm (as pricing step). Column generation with labeling is disclosed in detail in the Bachelor Thesis "The Vehicle Routing Problem with Time Windows" by André Chassein, 2011 which is available at the University of Kaiserslautern, Germany.

The route data structure includes one or more route vectors representing a set of route options for a plurality of available resources to fulfill a plurality of job orders at respective physical locations. A particular job order location on a route is represented by a corresponding route vector element of a respective route vector. Each route option in the route data structure is associated with route specific cost (e.g., travel time, travel distance).

The method then tries to find a near optimal solution for assigning the available resources to respective job orders in a resource specific route while at the same time taking into account the physical constraints which are responsible for the cost associated with each particular route option. The available resources, the respective route options and the associated cost per route option are used as input for a linear program.

The linear program is solved to obtain a route assignment solution for the set of route options in the route data structure for the available resources in compliance with a termination parameter. That is, on the one hand, the optimization algorithms and heuristics is supposed to be usable for offline and online scheduling, and on the other hand, the algorithms are supposed to cover real-world constraints and objectives. Commercially available linear program solvers (LPS) include mixed integer linear program (MILP) or mixed integer program (MIP) solvers. Commercially available MILP solvers are, for example, the IBM ILOG CPLEX solution, the GUROBI optimizer, or the SCIP MIP solver. The termination parameter can be configured to end the linear program solution for example after a predefined time interval or optimality gap. In one embodiment, the termination parameter may be a time-out parameter and a termination condition for the solving is met when the elapsed solving computation time exceeds a time interval specified by the time-out parameter. In another embodiment, the termination parameter may be an optimality gap and a termination condition for solving is met when the difference between the current lower and upper bound falls below a specified value (e.g., a given percentage). In another embodiment, the termination parameter may be a memory-out parameter and the termination condition for solving is met when the memory consumption for solving the linear program exceeds a memory allocation specified by the memory-out parameter. In another embodiment, the termination parameter may be a computation-out parameter and the termination condition for solving is met when the number of performed computation operations exceeds a threshold number of operations specified by the computation-out parameter.

The use of a termination parameter allows cutting off the execution of the linear program solver at a time when no optimal solution has been computed yet but reduces the runtime of linear program solver to a time interval which is suitable in the context of workforce scheduling. As a consequence, it is unlikely that at the time when the termination condition according to the termination parameter is met the solution variables of the solution relating to respective route options are not integer values. An integer value of a linear solution variable indicates clearly if a route is assigned to a particular resource or if it is not assigned to this particular resource. Any value in between (fractional solution) indicates that no optimal assignment to a particular resource has been found yet by the LPS. Creating integrality for the solution of the linear program by the LPS (i.e., finding a non-fractional solution by the LPS) can last for a long time (e.g., days) when the amount of available resources and pending job orders approaches real world dimensions (e.g., 50 resources and 500 job orders).

If, nevertheless, at the time when the termination condition is met, the solution of the linear program is non-fractional, then the solution provides the complete route assignment solution for the set of route options because for each route option the respective solution variable clearly indicates if the route is selected for a respective resource (and therefore assigned to this resource) or not. In these cases, each resource is assigned to exactly one route. The entirety of the assigned routes includes at least a subset of the pending job orders (e.g., the most relevant job orders, such as for example the most lucrative job orders) and the respective travel cost is kept near the minimum cost. It is to be noted that there is no need to assign all pending job orders. The solution of the linear program may result in routes including only the most relevant job orders by for example taking into account the profitability of the respective job orders and the associated distances and travel times.

However, typically the solution of the linear program is only partial at the time when the termination condition is met. That is, the solution is fractional in that at least some of the solution variables still have non-integer values. In this case, a subset of the fractional solution variables is rounded to a route-is-assigned value. For example, the route-is-assigned-value may be "1" indicating that the route is assigned to the respective resource. A solution variable value of "0" may indicate that the route is assigned to another resource or not assigned at all. Rounding fractional solution variables which have, for example, a value which is close enough to the route-is-assigned value can shorten the computation time significantly by leading to a perhaps sub-optimal but still good route assignment results in relatively short time compared to the computation needed for establishing integrality for the solution of the linear program. In one embodiment, it may be advantageous to select as the subset of the fractional solution variables for rounding such variables having a value within a predefined distance to the route-is-assigned value. In one embodiment, it may be advantageous to select as the subset of the fractional solution variables for rounding a percentage of the fractional variables being closest to the route-is-assigned value. In both cases, route options having solution variables with fractional values which are not yet good enough for being rounded will remain unassigned. Route options where the associated solution variable already has the route-is-assigned value when the termination condition is met are identified as assigned routes and can be stored in an assigned routes data structure accordingly. The remaining solution variable including such variables which were just rounded to the route-is-assigned value are then further processed by the LPS which is again followed by the identification of the then assigned routes (non-fractional solution variables) and a further corresponding rounding step for the not yet assigned routes (fractional solution variables). This can be repeated until finally the entire solution is non-fractional in such a way that no pending job order can be included without violating constraints. Such constraints may be based on: time windows available for respective job orders to be executed, skill sets of the available resources (e.g., whether a resource has all skills required for a particular job order execution), or shift times (e.g., working hours of the respective resources) This rounding technique in combination with the termination parameter allows significant performance gains for computing route assignments in a real world scenario where for the computation only a very limited amount of time (in the range of seconds to minutes) is available to account for short term changes in the inputs (available resources, pending orders, route cost) of the linear program.

In one embodiment, the subset of the fractional solution variables used for rounding can be formed by selecting such variables having a value within a predefined distance to the route-is-assigned value. For example, variables where the value is greater or equal "0.7" or another appropriate threshold value may be rounded to the route-is-assigned value (e.g., "1"). In one embodiment, the subset of the fractional solution variables used for rounding can be formed by selecting a percentage of the fractional solution variables wherein the percentage includes the fractional variables being closest to the route-is-assigned value. For example, 20% of the fractional solution parameters being closest to the route-is-assigned value (or any other appropriate percentage) can be rounded in each rounding step. The two embodiments may also be combined which may lead to faster convergence of the linear program solution to the desired fully integer solution. The percentage and/or distance parameter may also be determined dynamically during runtime, for example, in dependence of the speed of convergence.

The route data structure may be created by applying column generation with the labeling algorithm to a data structure. The net data structure includes a plurality of nodes wherein pairs of nodes are connected through respective connections. Each node corresponds to a real world physical location of a potential job order and a particular connection corresponds to a real world connection between two respective physical locations. The particular connection has one or more physical constraint parameters reflecting physical constraints for moving a resource between the two respective physical locations. For example, a service technician may need to travel from a first to a second job order location and the traveling time can be influenced by a road construction site between the locations. The route data structure is initialized, for example, by setting an initial route option vector to "0" or by populating the route infrastructure with heuristic results for one or more route option vectors. Then, the system can compute the one or more vectors for the plurality of available resources as a solution of a resource constraint shortest path problem based on start locations of the available resources and a list of available job orders at respective nodes. The one or more computed vectors are then added to the route data structure as additional route options for the available resources.

The particular connection can be implemented as a directed arc and the one or more physical constraint parameters reflect physical constraints for moving a resource from the first to the second node. That is, a connection between two order location nodes may include two directed arcs wherein one points from the first node to the second node and the other from the second to the first node. This allows putting different physical constraints on the same connection for going back and forth. In real world scenario for example, one direction may have a speed limit or may be blocked wherein the other direction does not show such physical constraints. Using directed arcs instead of edges as connection implementations allows accounting for such differences in both directions which improves the accuracy of the overall route assignment method.

In further embodiments, a computer program product when loaded into a memory of the computer system and executed by at least one processor of the computer system causes the computer system to execute the steps of a respective computer implemented method for performing the above described functions of the computer system.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

**Brief Description of the Drawings**

FIG. 1 is a simplified flow chart of a computer implemented method for improving route assignment performance using column generation with labeling and smart rounding;

FIG. 2 illustrates a net data structure with order locations and connections according to an embodiment of the invention;

FIG. 3 illustrates a route data structure with route options for available resources and associated linear program variables according to an embodiment of the invention;

FIG. 4 is a simplified system architecture for a computer system which can execute program instructions to perform the method for improving route assignment performance;

FIG. 5 illustrates label examples as results of the labeling algorithm according to an embodiment of the invention;

FIG. 6 is a diagram that shows an example of a generic computer device 900 and a generic mobile computer device 950, which may be used with the techniques described here.

**Detailed Description**

In the following detailed description embodiments of the invention are explained by way of example in the context of human resources (e.g., service technicians) who process job orders (or jobs) at various locations being part of respective routes.

Constraints for job order optimization and the respective route optimization can be summarized as:

- Given one service technician and a set of service requests with appointment windows, it may be required to find a route for the service technician with minimal serving cost while servicing as many requests as possible. Additionally, appointment windows for the requests may be required to be fulfilled and breaks during the day may be mandatory.

- Computation time is preferably in the range of seconds or minutes.

- A given service request may require respective skill sets of a service technician.

The output of the optimization computation can be a sequence of service requests (visiting order of locations on the route) and how they are allocated to respective service technicians (resources).

Job order optimization may use sophisticated speed schemas for calculating the expected travel time between two points. A speed schema can be based upon the airline geographic distance between two points. Table 1 shows an example for a speed schema or speed profile.

Table 1:

| Speed Profile | Distance (m) | Speed (km/h) |
|---|---|---|
| Level 1 | 500 | 10 |
| Level 2 | 5500 | 40 |
| Level 3 | >5500 | 90 |
| | | |
| Street Factor | 1.414213562 | |

The airline geographic distance between two points is multiplied by the street factor $\sqrt{2} \approx 1.414213.$ For the first 500 meters, a speed of 10 km/h is assumed, for the next 5000 meters, a speed of 40 km/h is assumed and for all travel after the first 5500m, a speed of 90 km/h is assumed.

The airline distance can be calculated using the latitude (lat) and longitude (lon) of two locations (or points) with the following formula:

$$d = R * acos(sin(lat1) * sin(lat2) + cos(lat1) * cos(lat2) * \\ cos(lon2 - lon1))$$

where, d is the airline distance and R the earth radius of approximately 6378.388km.

Simple speed schemas may be outperformed by using street level information during the optimization. Street level information can be obtained, e.g., from commercially available services, such as for example, GOOGLE MAPS or MICROSOFT MAPPOINT. For using street level data in the optimization, distance matrices can be created for all our input instances. A distance matrix may include three entries (street level distance, street level travel time and geo-distance) for all possible point to point connections between job order locations. For example, the street level data (e.g., travel distance, travel time), which include physical constraint parameters reflecting physical constraints for moving a resource (e.g., service technician) from a first to a second location, can be extracted from such services through respective APIs of said services.

For example, a typical problem may include 50 resources (service technicians) and about 500 job orders (service requests at respective locations). For this example, more than 300,000 distances (edges) need to be pre-calculated. It may be impractical to pre-populate a distance matrix for a complete customer database which may include up to 10,000 technicians and 500,000 job order locations. Such a fully populated matrix would require the computation of more than 260 Billion entries which is hardly achievable with present commercially available computers.

It may be advantageous when using street level data, to use clustering methods or to pre-calculate entries only for current customers in a pre-defined area.

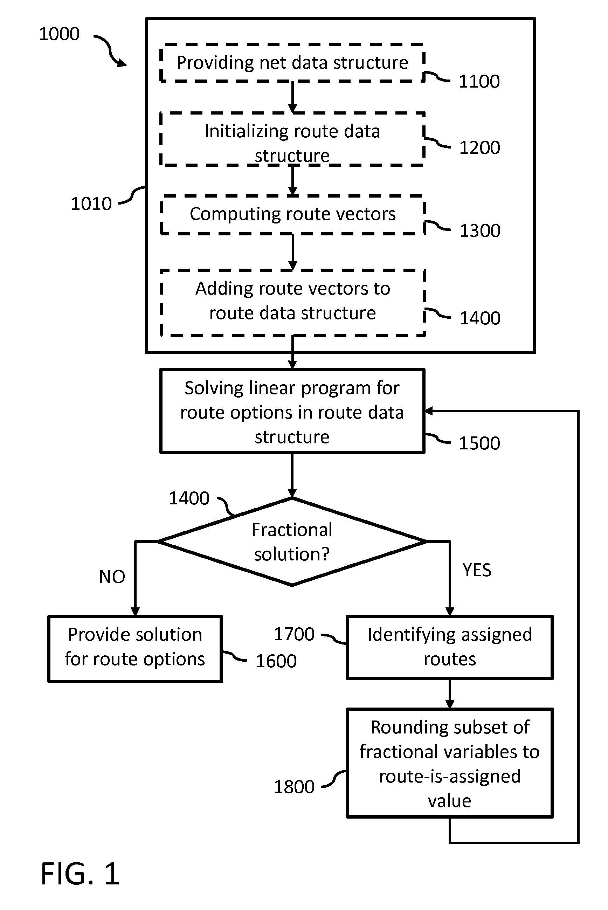

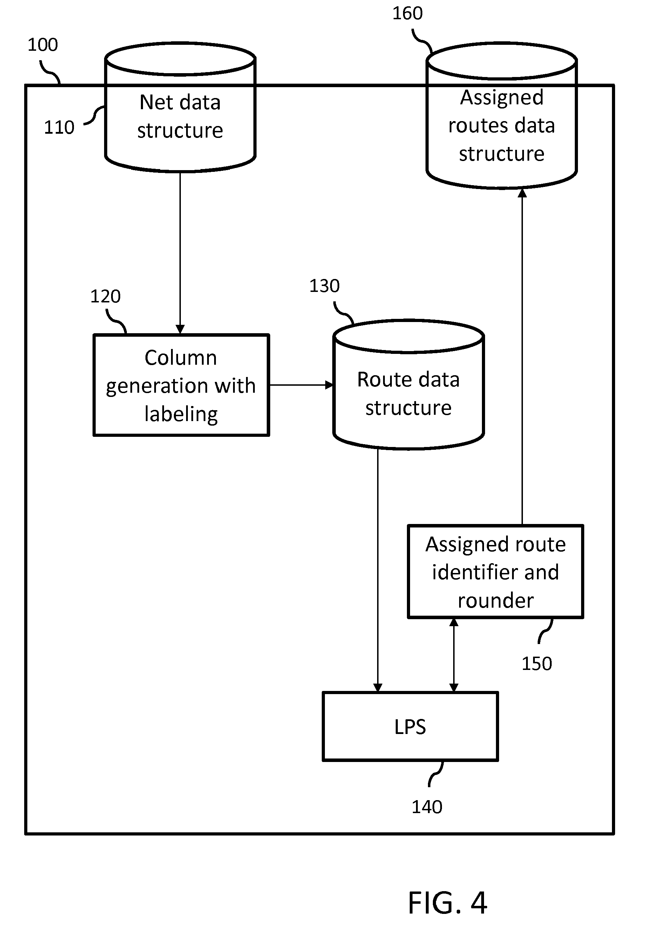

FIG. 1 is a simplified flow chart of a computer implemented method 1000 for improving route assignment performance using column generation with labeling and smart rounding. The method steps can be executed by respective components of a computer system as, for example, the components of the computer system 100 illustrated in FIG. 4. For convenience of explanation, the following description refers to objects and corresponding reference numbers of both figures.

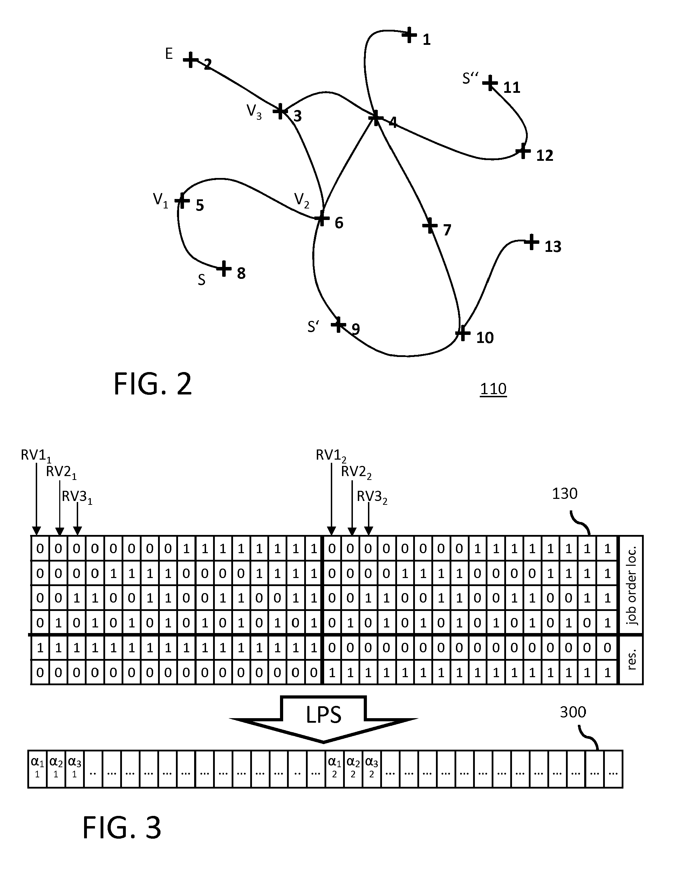

The computer implemented method 1000 starts with providing 1010 a route data structure 130 by using column generation with labeling algorithm. Turning briefly to FIG. 3, the route data structure 130 has one or more route vectors $RV1_1$ to $RVn_m$ representing a set of route options for a plurality of available resources to fulfill a plurality of job orders at respective physical locations. In the example of FIG. 3 the bold lines separate the route data structure 130 into four sections. The upper sections include a plurality of route options wherein a particular job order location on a route is represented by a corresponding route vector element of a respective route vector. In the example the route options include four job order locations being reflected by the four respective route vector components in the upper four rows of the route data structure 130. In the lower part of the route data structure the available resources are indicated for the respective route options. The route vectors in the left part of the route data structure indicate route options for a first resource whereas the route vectors in the right part of the route data structure 130 indicate route options for a second resource. A resource in the example is indicated by the value "1" below the respective route vector. Each route option is associated with route specific cost (not shown).

Now turning back to FIGs. 1 and 4, providing 1010 the route data structure 130 can include the following optional steps: providing 1100 net data structure 110, initializing 1200 route data structure 130, computing 1300 route vectors and adding 1400 route vectors to the route data structure 130.

In this embodiment, the computer system 100 has data storage means for providing 1100 the net data structure 110 which a plurality of nodes. Turning briefly to FIG. 2, nodes are labeled with enumeration numbers 1 to 13. Each node corresponds to a real world physical location of a potential job order. Some nodes which are part of a specific route are additionally labeled indicating a route navigation scheme. For example, one route starts at node S, passes by the nodes $V_1$, $V_2$, $V_3$, and ends at node E. Pairs of nodes are connected through connections wherein a particular connection (e.g. $[V_1, V_2]$ corresponds to a real world connection between the two respective physical locations $V_1$, $V_2$. The particular connection typically has one or more physical constraint parameters (e.g., travel time, travel distance, etc.) reflecting physical constraints for moving a resource between the two respective physical locations. Each connection may include two directed arcs with opposite directions. Each arc may include different physical constraint parameters for each direction. That is, traveling back and forth between two locations may be associated with different cost. The net data structure 110 may also be stored on a remote storage device communicatively coupled with the computer system 100,

Now turning back to FIGs. 1 and 4, the route data structure 130 is initialized 1200 by the column generation with labeling component 120. Initialize may include starting with empty routes (only "0" value route options vectors) or according to fast start heuristic algorithms that provide feasible solutions. By using fast start heuristic algorithms the subsequent solution computations can be shortened because the start condition is already an improved basis when compared to the empty route start condition.

The column generation with labeling component 120 then computes 1300 the one or more route option vectors for the plurality of available resources as a solution of a resource constraint shortest path problem by applying column generation with a labeling algorithm to the net data structure 110 based on start locations S, S', S" of the available resources and a list of available job orders at respective nodes 1 to 13. In other words, the system looks for available resources having start locations in the neighborhood of the job order locations which need to be visited and determines potential route options for each available resource. The one or more computed route option vectors are then added (1400) to the route data structure 130 as additional route options for the available resources. This procedure is disclosed in details in the above mentioned bachelor thesis "The Vehicle Routing Problem with Time Windows".

The LPS component 140 is then solving 1500 a linear program to obtain a route assignment solution 300 (cf. FIG. 3) for the set of route options in the route data structure 130. The inputs to the linear program are the available resources (cf. lower sections) and the route option vectors (pending job orders associated with job locations, cf. upper sections) as well as the cost for each route option which includes the cost associated with all connections in the respective route option. The linear program solution is computed for the available resources in compliance with a termination parameter. Each computed linear solution variable $\alpha_1^1$ to $\alpha_n^m$ (cf. FIG. 3) of the solution 300 relates to a respective route option, i.e., a possible route vector associated with a particular resource.

The assigned route identifier and rounder component 150 checks if the solution 300 is non-fractional, that is, it checks whether all solution variables $\alpha_1^1$ to $\alpha_n^m$ of the linear program have an integer value. If this is the case, then the solution 300 is provided 1600 as the route assignment solution for the set of route options. In other words, in this case no additional pending job order can be assigned to a route without violating constraints (e.g., time windows, skill sets, shift times, etc.) and the exactly one route is assigned to exactly one particular resource. The identified routes can then be stored in the assigned routes data structure 160. The assigned routes data structure 160 can be implemented as an integral part of the computer system 100 or it may be stored on a remote storage communicatively coupled with the computer system 100.

If the assigned route identifier and rounder component 150 finds the solution 300 to be fractional it means that one or more resources are fractionally assigned to multiple routes or one or more job orders are fractionally assigned to multiple routes. The identifier and rounder component 150 then identifies 1700 route options having solution variables with a non-fractional route-is-assigned value as assigned routes. Such identified routes were already uniquely assigned to a respective resource during the previous solution of the linear program at the time the solution computation was terminated. That is, any route option being associated with an integer solution variable equal to the route-is-assigned value is assigned to a respective resource in such a way that none of the job orders included in the assigned route is included in any other route option which still has a fractional solution variable. Such identified routes can be stored in the assigned routes data structure 160 and need not to be considered for the further solving of the linear program. The remaining fractional solution variables need still to be further processed to finally arrive at an integer solution of the linear program. The identifier and rounder component 150 then rounds 1800 a subset of the fractional solution variables to the route-is-assigned value. The rounded subset and all remaining fractional solution variables are then provided as input to the LPS component 140 to proceed with creating an integer solution for the linear program. In other words, the solving 1500 and rounding 1700 are repeated by the computer system 100 until the solution 300 is non-fractional (integer). Once an integer solution is computed it is provided 1600 as the solution for the assigned routes.

In one embodiment, the identifier and rounder component 150 can select as the subset of the fractional solution variables for rounding such solution variables having a value within a predefined distance to the route-is-assigned value. That is, for example, any solution variable which deviates from the route-is-assigned value by less than a particular threshold value will be rounded. This particular threshold value may be predefined (e.g., 0.8) or it may be dynamically adjusted in the different rounding iterations. For example, in the initial rounding step a threshold value of 0.6 may be assumed which can be continuously increased with the subsequent rounding steps.

In one embodiment, which can also be combined with the previous embodiment, the identifier and rounder component 150 can select as the subset of the fractional solution variables a percentage of the fractional variables being closest to the route-is-assigned value. The percentage may be predefined (e.g., the top 20%) or it may be dynamically adjusted in the various rounding iterations. In other words, the rounder component 150 may sort all fractional solution parameters and select for example, the top 20% of such variables as the subset for rounding. For example, to speed up the computation time for the integer solution of the linear program, the percentage may be a larger value in the initial rounding step and can be adjusted to smaller values in the subsequent rounding steps when the size of the linear program is reduced already.

It is to be noted that an integer solution of the linear program typically consumes a high amount of computational resources and lasts for a time period which is typically far too long to be used in real world planning scenarios. The above proposed stepwise solution of the linear program by using the termination condition in combination with the smart rounding algorithm significantly reduces the computation time to create integrality for the liner program solution so that it can be used in real world planning scenarios. The final route assignment solution is still very close to the optimal solution which could be achieved by an integer solution of the linear program.

FIG. 2 illustrates the net data structure 110 with order locations and connections according to an embodiment of the invention. The net data structure 110 has a plurality of nodes 1 to 13 wherein pairs of nodes (e.g., [8,5], [6,4], [6,3], etc.) are connected through edges or directed arcs. Each node corresponds to a real world physical location where a job order is to be performed and a particular edge/arc corresponding to a real world connection between a first node 8 and a second node 5. Any appropriate data structure for storing such information may be used. For example, table or graph data structures may be used.

In a first step, a labeling algorithm is used to find the best assignment of job orders to a particular resource (e.g., service technician) and to compute an optimal route for the resource regarding the locations where the job orders are to be executed. In other words, the job order locations of pending job orders correspond to the plurality of nodes 1 to 13 in the net data structure 110. A particular connection between two nodes corresponds to a real world connection between the respective job order locations. A particular edge/arc has one or more physical constraint parameters reflecting physical constraints for moving the resource (service technician) from the first to the second node (e.g., from 8 to 5). A job order is associated with a particular location, namely the place where the order needs to be executed. Further, the job order needs to be executed by a resource and therefore needs to be assigned to a respective service technician. The disclosed labeling algorithm allows solving this problem.

The following assumptions are made:

Every route starts at a particular start location node S and ends at a particular end location node E. In the example, one particular route can be defined with S=8 and E=2. This route can be described as a route vector RV=(8, 5, 6, 3, 2) including all nodes 8, 5, 6, 3, 2 (or S, $V_1$, $V_2$, $V_3$, E) of the route in the corresponding order or sequence.

Routes may include breaks. A break can be specified by the duration of the break and a time window during which the break must be taken. Breaks can be implemented as nodes in the net data structure 110. A break can be seen as a task performed at a certain location.

A job can be specified by some or all of the following criteria: a time interval needed to finish the job order, a time window in which the job order must be started, a time interval needed to travel to any other job location, the cost which arise by travelling from this job to any other job, a priority of the job (e.g., based on the profit, which is created by doing this job).

The labeling algorithm can identify feasible routes in view of the physical constraints associated with the edges and the jobs at the respective locations. A feasible route describes the order in which jobs can be done and breaks may be taken. The time windows of breaks and jobs may be taken into account.

In one embodiment, a job can be split (e.g., after a minimum split time) to squeeze in a break. In this special case breaks can violate the time window constraint.

For the purpose of solving the job order optimization problem, the cost of a particular route is defined as the sum of all travel-costs (i.e., the physical constraints associated with the edges: travel time, travel distance ...) which arise by traveling from one job location to another job location plus the sum of all profits obtained from the jobs, which are executed on this route. The profits are considered to be negative so that the route going directly from S to E is not necessarily the best route.

Even without the break constraints this problem is NP-complete. It can be formulated as a Resource Constrained Shortest Path Problem (RSTP), which is NP-complete. Instead of trying to find the optimal solution a heuristic approach is proposed to find a good enough but not necessarily optimal solution in a reasonable amount of time.

The net data structure 110 includes a node for each job order. An edge between the nodes represents the connection between two respective jobs. Each edge includes a travel-time and a travel-cost constraint. The algorithm should test all possible routes from S to E. In a real net data structure the number of possible nodes and edges can be so big that it becomes impossible to enumerate this problem. Therefore, it can be advantageous to exclude some routes. Excluding these routes can be achieved with the disclosed labeling algorithm. In the following some terms are defined which are used in the context of the labeling algorithm.

Definition: Label

Labels are stored in the nodes of the net data structure 110. Let an arbitrary Label be stored in node V, then this Label V represents exactly one route from the start-node S to V. This Label is described by the following information:

- Cost of the route so far
- Time spent so far
- Time spent so far and the time that needs to be reserved for upcoming breaks (unspent break time)
- The route described so far (all nodes visited by the route)
- The index of the last order or start location before the last break
- A list of breaks that are already taken by the service technician.

An example of a label structure is shown in table 2.

Table 2: example of information which may be stored in a label

| C | Cost |
|---|---|
| T | Time spent |
| TB | Time spent and unspent break time |
| VN | List of visited nodes |
| I | Index before break |
| BD | List of breaks done |

Definition: Domination of two labels: Given label $L_1$ and $L_2$ both can be stored in the same node. $L_1$ dominates $L_2$. ($L_1 < L_2$), if:

- Costs of $L_1$ < Costs of $L_2$
- Time of $L_1$ < Time of $L_2$
  (the above conditions may be combined with a logical AND or a logical OR)

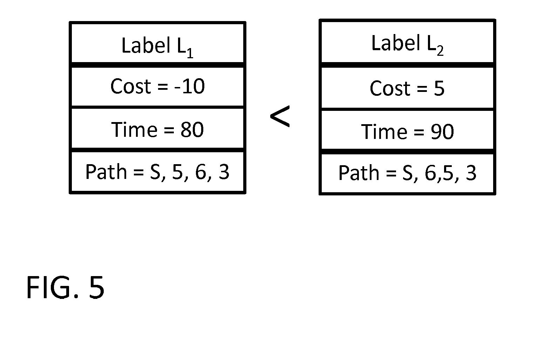

FIG. 5 illustrates and example where the route described by $L_1$ is better than by $L_2$ (for each criterion fulfilling a logical AND relation). Therefore, $L_2$ can be discarded and does not need to be stored.

Definition: Start-Label: A Start-Label can contain the following information:

- Costs = 0
- Time = Earliest start time of the route
- Description = {S}

For example, for a particular resource every route must be started at S because S may correspond to the location where the service technician is at the respective start time.

The following functions can be used in the Labeling Algorithm:

function: push(List of Labels, Node $V_1$, Node $V_2$)

Input: List of Labels in $V_1$
Output: Set of all Labels you will get, if you push all labels in $V_1$ over the arc connecting $V_1$ and $V_2$

Given a Label $L_1$ stored in an edge from a first node $V_1$ to a second node $V_2$ a Label $L_2$ can be created by pushing $L_1$ over the given edge.

Pictured: The identified route from S to $V_1$ can now be expanded by traveling from $V_1$ to $V_2$.
$L_2$ can be described by the following data:

- Costs= Costs of $L_1$ + travel costs of the corresponding edge ($V_1$ to $V_2$)
- Time = Max(Time of $L_1$ + travel-time of this edge, earliest start time at $V_2$)
- Route Description =Route Description of $L_1$ "+" Node $V_2$

If Time of $L_1$ + travel-time of this edge is greater than the latest start time at $V_1$, $L_2$ cannot be created.

function: EFF(List of Labels $\mathcal{L}_1$, List of Labels $\mathcal{L}_2$ )

Input: Two lists of labels (all stored in the same node)
Output: The set of labels, which are not dominated by any other label of the two lists

Thereby, a set of new labels is compared with a set of already available labels at the new node.

The labeling algorithm can be described by the following pseudo-code. At the beginning of the algorithm the only existing label is the start label of the start node.

A={S} ($\triangleq$List of all active Nodes)

Notation: $\mathcal{L}$(N) = All Labels stored at node N

while(A≠∅)

{

    select a node V from A

    for each(Node W ≠ V)

    {

        Q=push($\mathcal{L}$(V),V,W)

        if(EFF(Q,$\mathcal{L}$(W))≠$\mathcal{L}$(W))

        {

            if(W∉A) A=A∪{W}

            $\mathcal{L}$(W)= EFF(Q,$\mathcal{L}$(W)

        }

    }

    A=A\{V}

                }

Select the best Label from $\mathcal{L}$ (E) to get the best route from S to E.

If a node is active (i.e., included in a list of active nodes) new information (label) can be stored in this node. A particular node can be removed from the list of active nodes if the information stored in this particular node is shared with other nodes. For this purpose all labels stored in this particular node can be pushed to all other nodes (target nodes).

As a result two cases can occur:

a) The labels stored in the target nodes dominate every created label. In this case the algorithm was not able to find better routes for a respective target node and the target node remains unchanged.

b) The algorithm identifies labels for the target node, which are not dominated. In this case the following actions can be taken:

1. Change the set of labels stored in the target node. Add the new non-dominated labels and remove old labels, which are dominated.

2. If the target node was not active set the target node to active because new information for this node was generated

If the list of active nodes is empty, all information is shared. That is, no new non-dominated label can be created anymore. The algorithm can then be stopped. The best label in the end-node E represents the best created route.

The above push function may be modified to take into account that a particular job order is not allowed to be executed more than once. Adding this constraint to the above model results in the following changes:

- a feasible route needs to be cycle free.
- a label cannot be pushed over an edge, if the corresponding route contains a cycle.

The push function can be adapted to fulfill this constraint by adjusting is the definition of domination. To make sure that Label $L_1$ is better than $L_2$ the following conditions need to be met:

- Costs of $L_1$ < Costs of $L_2$
- Time of $L_1$ < Time of $L_2$
- All nodes visited by $L_2$ are already part from the route described by $L_1$

For example, $L_1$ describes the route $(S,V_1,V_2)$ and $L_2$ describes the route $(S,V_3,V_2)$ with:

Costs of $L_2$ < Costs of $L_1$ and Time of $L_2$ < Time of $L_1$

Using the earlier definition of domination label $L_2$ would be deleted. However, if $V_3$ has a huge profit and $L_1$ is pushed from $V_2$ to $V_3$, a new route is obtained, which may lead to the optimal route. It is not allowed to push $L_2$ from $V_2$ to $V_3$. Therefore, Label $L_1$ cannot be deleted.

An implementation of such constraints can also be achieved as additional domination criteria leading to a much larger amount of labels and, as a consequence, long computation times. Therefore, it may be advantageous to handle this problem by changing the push function accordingly but leaving the domination rules unchanged. This may lead to routes which are suboptimal but ensures reasonable computation times.

One aspect of the above described optimization solution is the minimization of travel cost for service technicians. Travel cost as used in this document does not refer to monetary cost. Rather, travel cost relates to physical parameters such as the travel distance or the travel time or a convex combination of both, or to other physical parameters that can be derived or measured. For example, one may assume that one meter of travel corresponds to one unit of travel cost. Further, the number of served job orders should be maximized which is achieved by defining a profit for each service request. Profit as used within this document does not refer to monetary profit. Rather, the profit corresponds to the travel distance that is worth traveling in order to not miss a request for a job order. The following requirements can be incorporated in the optimization problem:

- jobs have appointment windows

- jobs require certain skills

- Service technicians provide certain skills

- Preferences between service technicians and job types

- Flexible definition of mandatory breaks for service technicians

- Performance factors for service technicians

- Different types of jobs

   ■ Emergency jobs, mandatory jobs, not time-critical jobs

   ■ Aggregated and complex job orders

- Soft Time Windows

   ■ Penalize being early or late at an appointment

- Soft Shift Time Windows

   ■ Penalize overtime work for shifts

In the following a column generation approach is discussed for solving the job-resource scheduling optimization problem. The idea of the column generation algorithm is to find the set of routes for the scheduling problem with the minimal cost (i.e., cost in the above non-monetary sense). It is not possible enumerate all possible routes in the available amount of time to choose the minimal routes. Therefore, a good enough subset of the routes is identified to choose from.

First, a route data structure is initialized. The route data structure configured to store a plurality of vectors (columns of the route data structure) wherein each vector corresponds to a particular real world route path connecting a route start point (S) and a route end point (E) for fulfilling at least one particular job order using a particular resource.

For example, the algorithm can start with a feasible solution, e.g. initializing the route data structure with zero values (empty solution). Then new potential routes (vectors) can be added to the set of feasible routes. The routes can be selected by solving a resource constraint shortest path problem, which itself is NP-hard. The resource constraint shortest path problem is solved using the above disclosed labeling algorithm.

Once enough new potential routes are identified, a linear program (LP) is solved on the identified sub-set of routes. The result of this linear program is the optimal solution on the identified sub-set of routes. The optimal solution may still be fractional. Now, more routes can be added to the solution space of the sub-set of chosen routes in a way that only routes are added which can potentially improve the objective function value, i.e. the solution quality of the real world problem. This may be checked by using the dual variables of the primal problem. Finding the routes using the duality of linear programing is again done with the disclosed labeling algorithm. Having added new sets of routes, the linear program is solved again. The steps of adding new routes (or columns) are repeated, solving the linear program and updating the dual cost, until a termination condition is fulfilled. The termination condition may be based on a new columns termination parameter (no new columns can be found anymore) or it may be based on a timeout termination parameter (a predefined or dynamically computed timeout limit is reached). Terminating the linear program solution in compliance with a condition specified by a termination parameter ensures that the computation comes to an end within a meaningful time interval by accepting a non-optimal solution.

Then, the linear program is solved again. It may end up with a fractional solution. A fractional solution means that there may be nodes on the various routes where a unique assignment of a particular resource to a particular job has not been reached yet. For example, linear variable may end up with a value of 0,8 meaning that a particular job (e.g., at $V_2$) may be scheduled with 80% for a first resourced and still with 20% for a second resource. To establish integrality one can solve the linear program as integer program (IP). This provides optimal solution on the solution space of the chosen routes. However, this may only be recommendable for smaller sized problems since solving an integer program typically takes longer time than acceptable in the application context of job scheduling. As a consequence, a smart rounding technique is proposed instead to improve the system performance to such an extent that the computation time is reduced to acceptable time intervals in the application context. The proposed smart rounding algorithm sorts the linear variables of the linear program (e.g., in decreasing or increasing order) and rounds a given percentage of the variables to "1". Each linear variable relates to a particular job order on a particular route of a particular resource. The rounding of a linear variable to "1" means to partially resolve the ambiguity caused by fractional solutions of the linear program. It corresponds to assigning the respective job order to a specific route of a specific resource. However, at that time there may still be further variables having non-zero values for other resources in relation to the respective job order (those variables which were not rounded). Therefore, after each rounding of a variable to "1", the linear program is solved again. The rounding and the resolving of the linear program after rounding can be repeated until an integral solution is achieved which reflects a unique assignment of jobs to resources on their optimized routes. The solution may still be sub-optimal but is close to the optimal solution which would be the outcome of the integral solution of the linear program. The computation time for the close-to-optimal solution by using column generation with labeling with smart rounding is significantly reduced compared to the optimal solution of the linear program and can therefore be used in practical application scenarios. After the last rounding step, the computed routes can be stored and the system can continue with another reduced set of resources and job orders.

The following example illustrates how a person skilled in the art can implement the column generation algorithm, for example, by building on one of the earlier mentioned linear program solvers.

In the first step the feasible routes are identified:

- Start with an initial set of routes (heuristic or empty routes)

- Try to improve the "quality" of this initial set of routes by adding new routes (using Labeling Algorithm to find new routes)

- As long as new routes can be identified → ADD new routes (if they improve the quality of the set of routes)

- If no further route can be identified → STOP

A more detailed description of the column generation algorithm is given in the following by using the following terms and definitions:

- LabelGraph: a LabelGraph includes the start-, endpoint and breaks of one resource and all job orders, which can be executed by this resource.

- LabelGraph Problem: The problem to find the best feasible route in the LabelGraph.
- Feasible Route: Start at startpoint, End at Endpoint, do all breaks, respect all time windows
- Best: Good routes try to minimize costs and collect as many bonuses from job orders as possible. At the beginning the bonus of every job order is the profit earned by executing the respective job order. The bonuses job orders can change during the column generation process.
- MasterLP: Huge linear program (LP) which tries to combine a set of routes with respect to minimal costs such that every job order is served by exactly one resource and every resource executes exactly one route. Every column in the MasterLP corresponds to one feasible route. Only an integral solution of the MasterLP can be interpreted in a meaningful way.

pseudo code of column generation with labeling algorithm:

```
Set termination parameter (e.g., time limit)
Initialize list of all unscheduled job orders and unused resources
MAIN LOOP 0: while(scheduling is not finished)
   Create a LabelGraph* for every resource
   Create a Basis Solution of the MasterLP*(Every resource does an
   empty trip, no job order is served)
        LOOP 1: while(new columns are generated)
        Solve the MasterLP (using LP solver)
        Selection Criteria for resources (use resources having
        many columns more often)
        LOOP 2: for each resource in list of all unused resources
           Update bonuses in the LabelGraph (using the LP
           solver)
           Solve the LabelGraph Problem* (using the Label
           Algorithm)
           if (Good routes are found) ⇒ Create respective
           columns, add columns to MasterLP
        END LOOP 2
     END LOOP 1
     if(MasterLP Solution is integral)
        USE Integral Solution*
     else(MasterLP Solution is not integral)
        Try to solve the MasterLP as IP (using LP solver under
        time constraint)
        if(Integral solution was found by LP solver)
           USE Integral Solution
        else(termination condition is met)
           Round the best variable values in the LP Solution
           Use the partial integral solution like in USE
           Integral Solution
        end else
     end else
     Check if schedule is finished*
     END LOOP LEVEL 0
```

The methods used in the above column generation algorithm are now more detailed:

```
method USE Integral Solution
   Solution of MasterLP is integral ⇒ every resource is assigned
   to one route
   foreach resource in List of all unused resources
   if(current resource is not assigned to empty route)
        Schedule the empty route to current resource ⇒
        assigned route
        Remove current resource from List of unused
        resources
        Remove job orders executed in the assigned route
        from List of unscheduled job orders
     end if
   end foreach
```

```
method Check if schedule is finished
   if(List of unscheduled job orders is empty) ⇒ Schedule is
   finished
   if(List of unused resources is empty) ⇒ Schedule is finished
   if(No order could be scheduled in the actual MAIN LOOP) ⇒
   Schedule is finished
```

Once a solution is obtained from the column generation algorithm, integrality can be established. That is, the best possible solution is to be constructed from the obtained set of routes. This can be done by two methods:

a) Solving a linear program, which can be done relatively fast but leads to a fractional optimal solution.
b) Creating Integrality, which is associated with high computational effort but leads to a feasible integer solution.

FIG. 4 is a graph diagram illustrating the different methods of creating integrality. For performance reasons and time constraint in real world application scenarios the method a) may be advantageous. Configuration parameters used in this method are:

configuration parameter: int upper_bound_for_ip_size
This parameter defines a threshold size to separate small linear programs from large linear programs (LP). For example, if the number of all rows * number of all columns < upper_bound_for_ip_size then the LP is considered to be small. If the number of all rows * number of all columns > upper_bound_for_ip_size then the LP is considered to be large.

configuration parameter: double percent_of_rounding $\in$ [0,1]
This parameter (variable) becomes relevant if smart rounding is used. This variable describes the %-amount of resources to be assigned in one iteration round of the column generation with labeling algorithm. For example, in case there are 100 unassigned resources and percent_of_rounding=0.3, then routes are rounded until 30 unassigned resources are assigned to the respective job orders and routes. Advantageously at least one new resource is assigned in each iteration round.

The following three embodiments may be used to assign job orders to resources:

i. Fix integral values
If the values of all variables from the Master LP solution are integral all respective resource assignments can be created because no ambiguities and no redundancies are included in the LP solution.
ii. Solve Master LP as IP
If there are some variables with factual values, which are not integral, there is no meaningful interpretation of the LP solution. If the LP is small enough it can be solved with integrality constraints. The solution of the corresponding IP can be used to assign job orders to resources.
iii. Use Rounding
Variables corresponding to dummy routes can be ignored for rounding purposes. Only variables corresponding to real routes ("true variables") may be considered for rounding. Firstly, search the "true variable" with the highest value and assign the described route to the corresponding resource. Secondly, set the value of this variable to the value "1" and resolve the LP. Thirdly, repeat the first and second steps until enough resources are assigned. Enough in this context means that at least one resource and at most all resources are assigned. For example, enough can be defined by the configuration parameter percent_of_rounding.

In the following description a mathematical formulation for the column generation approach is provided. It is to be noted that the implementation of the described algorithm in the context of the real world problem of how to perform workforce scheduling in such a short amount of time that it becomes useful in real world workforce scheduling solves this technical problem by reducing the computational complexity present in IP solvers leading to an optimal solution. Instead, a sub-optimal but nearly optimal smart rounding solution is accepted which leads to a significant reduction of computation time vs. the optimal solution. The computational complexity is also based on the concept to start with an initial set of routes in a route data structure and to try to improve the "quality" of this initial set by adding new routes. As long as new routes are found which improve the "quality" of this initial set the new routes are added to the route data structure. If no new improving route can be found you stop and try to construct the best possible solution from the last set of routes.

The fractional solution of the integer program typically includes a convex combination of routes which in general does not correspond to routes anymore.
Convex Combination:

given an arbitrary set $M=\{M_1,...,M_n\}$

A convex combination from elements in M has the form:

$$M^* = \sum_{i=1}^{n} M_i \lambda_i \text{ where } \sum_{i=1}^{n} \lambda_i = 1 \text{ and } \lambda_i \geq 0 \; for \; i = 1, \ldots, n$$

There is no real meaningful interpretation of this object. However, this is no problem because at the end only trivial convex combination is allowed, where exactly one $\lambda_i = 1$ and all other $\lambda_i$ have value "0". This result corresponds again to a route.

Example:

Route 1: Go from the start location S to Job $V_1$ and after finishing Job $V_1$ go to the end location E.

Route 2: Go from the start location to Job $V_2$ and after finishing Job $V_2$ go to the end location E.

The object: $\text{Route}^* = \frac{1}{2} \cdot (\text{Route 1}) + \frac{1}{2} \cdot (\text{Route 2})$ cannot be interpreted.

A feasible route describes the daily routine of one resource. It may include all information which is necessary to describe the route during this day. For example: In which order are the jobs planned and when is the scheduled starting time? To ensure feasibility a feasible route needs to fulfill constraints given by time windows, skills and breaks. It is desirable to compute a respective feasible solution for each resource.
Given: R={$R_1$,...,$R_n$} "set of all resources" and J={$J_1$,...,$J_m$} "set of all job orders" and for i=1,...,n:

$$T(R_i) = \{T_i^1, \ldots, T_{N(i)}^i\} \text{ "set of all feasible routes for resource } R_i\text{"}$$

(N(i) is the number of all routes for resource $R_i$)

A feasible solution for one resource $R_i$ is a convex combination of feasible routes:

$$T_i^* = \sum_{j=1}^{N(i)} T_j^i \lambda_j^i$$

A feasible solution for all resources includes a feasible solution for every resource $R_i$ and fulfills the following constraint:

For every job order J there is: $\sum_{i=1}^{n} \sum_{j:Job\ J\ is\ part\ of\ route\ T_j^i} \lambda_j^i = 1$ for $J = 1,\ldots,m$

Example:

J={Job 1, Job 2}

Route 1.1: Go from the start location S to Job $V_1$ and after finishing Job $V_1$ go to the end location E.
Route 1.2: Go from the start location S to Job $V_2$ and after finishing Job $V_2$ go to the end location E
Route 2.1: Go from the start location S to Job $V_1$ and afterwards to Job $V_2$ and then to then end location E.
Route 2.2: Go from the start location S to the location where Route 1.1 and 1.2 are for resource 1 and Route 2.1 and 2.2 for resource 2.

Formal: T($R_1$)={Route 1.1, Route 1.2} and T($R_2$)={Route 2.1,Route 2.2}
A feasible solution is given by:

$$T_1^* = \frac{1}{2} \cdot (\text{Route 1.1}) + \frac{1}{2} \cdot (\text{Route 1.2}) = \lambda_1^1 \cdot (\text{Route 1.1}) + \lambda_2^1 \cdot (\text{Route 1.2})$$

$$T_2^* = \frac{1}{2} \cdot (\text{Route } 2.1) + \frac{1}{2} \cdot (\text{Route } 2.2) = \lambda_1^2 \cdot (\text{Route } 2.1) + \lambda_2^2 \cdot (\text{Route } 2.2)$$

The constraints for both jobs are checked:

Routes containing Job $V_1$ are: Route 1.1 and 2.1

This leads to : $\sum_{i=1}^{n} \sum_{j:Job\ V1\ is\ part\ of\ route\ T_j^i} \lambda_j^i = \lambda_1^1 + \lambda_1^2 = \frac{1}{2} + \frac{1}{2} = 1$

Routes containing Job $V_2$ are: Route 1.2 and 2.1

This leads to: $\sum_{i=1}^{n} \sum_{j:Job\ V2\ is\ part\ of\ route\ T_j^i} \lambda_j^i = \lambda_2^1 + \lambda_1^2 = \frac{1}{2} + \frac{1}{2} = 1$

The quality of a set of routes can be defined as the objective function value from the best feasible solution which can be constructed with this set of routes. Every route has assigned some cost (e.g., for travelling) which allows to compute the objective function of a certain convex combination of routes by using the same convex combination for the cost of the used routes.

Example:

Let $C_j^i$ be the cost of route $T_j^i$.

The objective value from the convex combination $T_i^* = \sum_{j=1}^{N(i)} T_j^i \lambda_j^i$ is $C_i^* = \sum_{j=1}^{N(i)} C_j^i \lambda_j^i$

The column generation algorithm can now start with a given set of feasible routes for each resource and then tries to add new feasible routes, which improve the quality of the set of routes. The first set of routes can be arbitrarily bad with respect to the objective function. The algorithm proceeds until no further routes can be found which can increase the quality of the set of routes. Typically a huge number of routes are created during this process. Then the algorithm tries to create the best scheduling for all resources using only the subset of routes being generated so far.

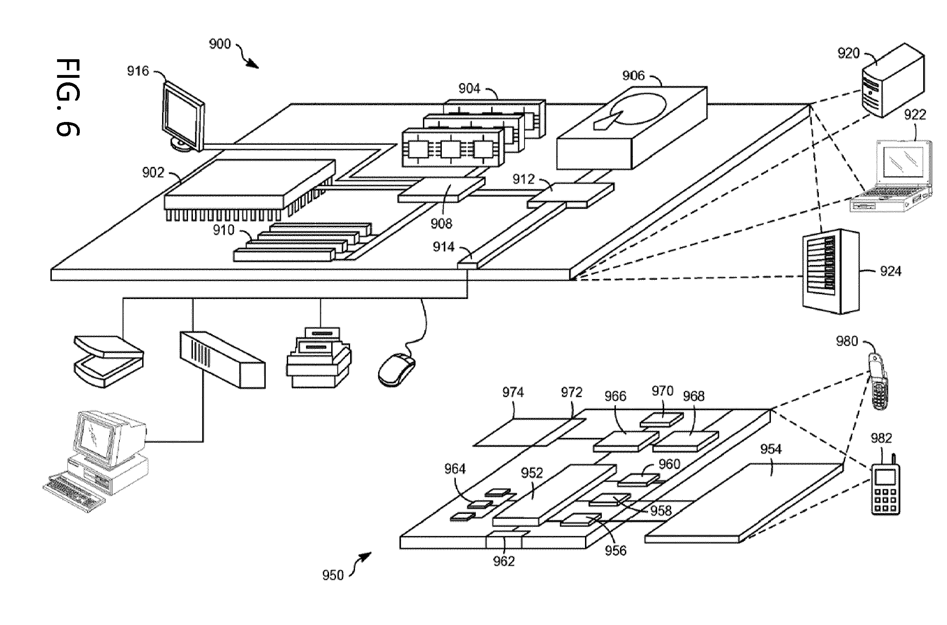

FIG. 6 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Computing device 950 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may be provide as a security module for device 950, and may be programmed with instructions that permit secure use of device 950. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

**Claims**

1. A computer implemented method (1000) for improving route assignment performance, comprising:

providing (1010) a route data structure (130) by using column generation with a labeling algorithm, the route data structure (130) having one or more route vectors ($RV1_1$ to $RVn_m$) representing a set of route options for a plurality of available resources to fulfill a plurality of job orders at respective physical locations, each route option being associated with route specific cost wherein a particular job order location on a route is represented by a corresponding route vector element of a respective route vector;
solving (1500) a linear program in compliance with a termination parameter to obtain a route assignment solution (300) for the set of route options in the route data structure (130) for the available resources wherein each solution variable ($\alpha_1{}^1$ to $\alpha_n{}^m$) of the solution (300) relates to a respective route option;
if the solution (300) is non-fractional, then providing (1600) the solution (300) as the route assignment solution for the set of route options; and
if the solution (300) is fractional, then identifying (1700) route options having solution variables with a non-fractional route-is-assigned value as assigned routes, rounding (1800) a subset of the fractional solution variables to the route-is-assigned value, and repeating the solving (1500) and rounding (1700) steps until the solution (300) is non-fractional.

2. The computer implemented method of claim 1, wherein rounding (1700) further comprises:

selecting as the subset of the fractional solution variables such variables having a value within a predefined distance to the route-is-assigned value.

3. The computer implemented method of claim 1 or 2, wherein rounding (1700) further comprises:

selecting as the subset of the fractional solution variables a percentage of the fractional variables being closest to the route-is-assigned value.

4. The computer implemented method of any of the previous claims, wherein identifying (1700) assigned routes includes storing the assigned routes.

5. The computer implemented method of any of the previous claims, wherein providing (1010) a route data structure (130) further comprises:

providing (1100) a net data structure (110) having a plurality of nodes (1 to 13, S, $V_1$, $V_2$, $V_3$, E) wherein pairs of nodes are connected through connections, each node corresponding to a real world physical location of a potential job order and a particular connection corresponding to a real world connection between two respective physical locations wherein the particular connection has one or more physical constraint parameters reflecting physical constraints for moving a resource between the two respective physical locations;
initializing (1200) the route data structure (130);
computing (1300) the one or more vectors ($RV1_1$ to $RVn_m$) for the plurality of available resources as a solution of a resource constraint shortest path problem by applying column generation with the labeling algorithm to the net data structure (110) based on start locations (S, S', S") of the available resources and a list of available job orders at respective nodes (1 to 13); and
adding (1400) the one or more computed vectors ($RV1_1$ to $RVn_m$) to the route data structure (130) as additional route options for the available resources.

6. The computer implemented method of claim 5, wherein the particular connection is a directed arc and the one or more physical constraint parameters reflect physical constraints for moving a resource from the first to the second node.

7. The computer implemented method of any of the previous claims, wherein the termination parameter is a time-out parameter and a termination condition for the solving (1500) is met when the elapsed solving computation time exceeds a time interval specified by the time-out parameter.

8. The computer implemented method of any of claims 5 to 6, wherein the termination parameter is an optimality gap and a termination condition for solving (1500) is met when the difference between the current lower and upper bound falls below a specified value.

9. The computer implemented method of any of claims 5 to 6, wherein the termination parameter is a memory-out parameter and the termination condition for solving (1500) is met when the memory consumption for solving (1500) exceeds a memory allocation specified by the memory-out parameter.

10. A computer program product that when loaded into a memory of a computing device and executed by at least one processor of the computing device executes the steps of the computer implemented method according to any one of the claims 1 to 9.

11. A computer system (100) for improving route assignment performance, comprising:

data storage means configured to store a route data structure (130), the route data structure (130) being generated by column generation with labeling component (120) and having one or more route vectors ($RV1_1$ to $RVn_m$) representing a set of route options for a plurality of available resources to fulfill a plurality of job orders at respective physical locations, each route option being associated with route specific cost wherein a particular job order location on a route is represented by a corresponding route vector element of a respective route vector;

a linear program solver component (140) configured to solve (1500) a linear program to obtain a route assignment solution (300) for the set of route options in the route data structure (130) for the available resources in compliance with a termination parameter wherein each solution variable ($\alpha_1^1$ to $\alpha_n^m$) of the solution (300) relates to a respective route option; and

an assigned route identifier (150) configured :

to provide (1600) the solution (300) as the route assignment solution for the set of route options if the solution (300) is non-fractional, and

if the solution (300) is fractional, to identify (1700) route options having solution variables with a non-fractional route-is-assigned value as assigned routes, and to round (1800) a subset of the fractional solution variables to the route-is-assigned value, and to call the linear program solver component (140) with the rounded subset until the solution (300) becomes non-fractional.

12. The computer system of claim 11, wherein the assigned route identifier (150) is further configured to select as the subset of the fractional solution variables such variables having a value within a predefined distance to the route-is-assigned value.

13. The computer system of claim 11 or 12, wherein the assigned route identifier (150) is further configured to select as the subset of the fractional solution variables a percentage of the fractional variables being closest to the route-is-assigned value.

14. The computer system of any of claims 11 to 13, wherein the assigned route identifier (150) initiates storage of identified assigned routes in an assigned routes data structure (160).

15. The computer system of any of claims 11 to 14, wherein:

the data storage means is further configured to store a net data structure (110) having a plurality of nodes (1 to 13, S, $V_1$, $V_2$, $V_3$, E) wherein pairs of nodes are connected through connections, each node corresponding to a real world physical location of a potential job order and a particular connection corresponding to a real world connection between two respective physical locations wherein the particular connection has one or more physical constraint parameters reflecting physical constraints for moving a resource between the two respective physical locations;

the column generation with labeling component (120) configured:

to initialize the route data structure (130);
to compute the one or more vectors ($RV1_1$ to $RVn_m$) for the plurality of available resources as a solution of a resource constraint shortest path problem by applying column generation with labeling to the net data structure (110) based on start locations (S, S', S") of the available resources and a list of available job orders at respective nodes (1 to 13); and
to add the one or more computed vectors ($RV1_1$ to $RVn_m$) to the route data structure (130) as additional route options for the available resources.

1000

Providing net data structure — 1100

Initializing route data structure — 1200

1010

Computing route vectors — 1300

Adding route vectors to route data structure — 1400

Solving linear program for route options in route data structure — 1500

1400

Fractional solution?

NO

YES

Provide solution for route options — 1600

1700 — Identifying assigned routes

1800 — Rounding subset of fractional variables to route-is-assigned value

FIG. 1

## FIG. 2

110

## FIG. 3

RV1₁ RV2₁ RV3₁  RV1₂ RV2₂ RV3₂  130

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|
| 0 | 0 | 0 | 0 | 0 | 0 | 0 | 0 | 1 | 1 | 1 | 1 | 1 | 1 | 1 | 1 | 0 | 0 | 0 | 0 | 0 | 0 | 0 | 0 | 1 | 1 | 1 | 1 | 1 | 1 | 1 | 1 | job order loc. |
| 0 | 0 | 0 | 0 | 1 | 1 | 1 | 1 | 0 | 0 | 0 | 0 | 1 | 1 | 1 | 1 | 0 | 0 | 0 | 0 | 1 | 1 | 1 | 1 | 0 | 0 | 0 | 0 | 1 | 1 | 1 | 1 | |
| 0 | 0 | 1 | 1 | 0 | 0 | 1 | 1 | 0 | 0 | 1 | 1 | 0 | 0 | 1 | 1 | 0 | 0 | 1 | 1 | 0 | 0 | 1 | 1 | 0 | 0 | 1 | 1 | 0 | 0 | 1 | 1 | |
| 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | 0 | 1 | |
| 1 | 1 | 1 | 1 | 1 | 1 | 1 | 1 | 1 | 1 | 1 | 1 | 1 | 1 | 1 | 1 | 0 | 0 | 0 | 0 | 0 | 0 | 0 | 0 | 0 | 0 | 0 | 0 | 0 | 0 | 0 | 0 | res. |
| 0 | 0 | 0 | 0 | 0 | 0 | 0 | 0 | 0 | 0 | 0 | 0 | 0 | 0 | 0 | 0 | 1 | 1 | 1 | 1 | 1 | 1 | 1 | 1 | 1 | 1 | 1 | 1 | 1 | 1 | 1 | 1 | |

LPS

300

| $\alpha^1_1$ | $\alpha^2_1$ | $\alpha^3_1$ | .. | ... | | | | | | | | .. | ... | $\alpha^1_2$ | $\alpha^2_2$ | $\alpha^3_2$ | | | ... | | | ... | | ... | | ... | ... | | ... | ... |

FIG. 4

| Label $L_1$ |
| :---: |
| Cost = -10 |
| Time = 80 |
| Path = S, 5, 6, 3 |

$<$

| Label $L_2$ |
| :---: |
| Cost = 5 |
| Time = 90 |
| Path = S, 6,5, 3 |

# FIG. 5

FIG. 6

Europäisches
Patentamt

European
Patent Office

Office européen
des brevets

**EUROPEAN SEARCH REPORT**

Application Number

EP 14 17 1345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-15 | INV. G06Q10/04 G06Q10/06 |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 14 November 2014 | Lutz, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 17 1345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. *<br>----- | | |

TECHNICAL FIELDS
SEARCHED    (IPC)

The present search report has been drawn up for all claims

| Place of search | Date of completion of the search | Examiner |
|---|---|---|
| The Hague | 14 November 2014 | Lutz, Andreas |

EPO FORM 1503 03.82 (P04C01)

**REFERENCES CITED IN THE DESCRIPTION**

**Non-patent literature cited in the description**

- **D. LESAINT ; C. VOUDOURIS ; N. AZARMI.** Dynamic Workforce Scheduling for British Telecommunications plc. *Interfaces,* January 2000, vol. 30 (1), 45-56
- Column Generation. Springer, 2005
- **ANDRÉ CHASSEIN.** The Vehicle Routing Problem with Time Windows. *Bachelor Thesis,* 2011